# FASCICULE DE BREVET EUROPEEN

(11) **EP 0 466 572 B1**
(45) Date de publication et mention de la délivrance du brevet: **16.03.1994**
(21) Numéro de dépôt: 91401898.1
(22) Date de dépôt: 09.07.1991
(51) Int. Cl.: B60N 2/44

(54) **Bloc de commande centralisé pour siège de véhicule**
Zentralisierte Steuervorrichtung für Fahrzeugsitze
Centralized control block for vehicle seat

(30) Priorité: 12.07.1990 FR 9008881
(43) Date de publication de la demande: 15.01.1992
(73) Titulaire: BERTRAND FAURE AUTOMOBILE, F-78391 Bois d'Arcy Cédex (FR)
(72) Inventeur: Leroy, Yannick, F-61100 Flers (FR)
(74) Mandataire: Madeuf, Claude Alexandre Jean

(56) Documents cités:
- EP-A- 0 348 820
- DE-A- 2 904 719
- DE-A- 3 039 218
- DE-A- 3 609 688
- DE-B- 1 116 550
- GB-A- 2 146 743
- US-A- 4 809 180

## Description

La présente invention a pour objet un boîtier de commande pour régler la position des différents éléments constituant un siège de véhicule et plus particulièrement un siège de véhicule automobile.

En effet, les sièges équipant aujourd'hui les véhicules de tourisme ou les véhicules poids-lourds doivent comporter en général les réglages suivants :
a) réglage longitudinal de l'assise (avant-arrière),
b) réglage du coussin sous-cuisses (avant-arrière),
c) réglage de l'assiette du siège (mouvement haut-bas et inverse),
d) réglage angulaire de l'inclinaison du dossier,
e) réglage de la longueur du dossier (haut-bas et inverse),
f) réglage de la partie de coussin lombaire,
g) réglage en inclinaison de la têtière par un mouvement simple ou double,
h) les différents autres éléments de réglage du dossier.

L'ensemble de ces mouvements est obtenu au moyen de divers mécanismes animés par des moteurs électriques ou autres, séparés, ce qui nécessite l'emploi de plusieurs circuits électriques ou autres devant fonctionner indépendamment les uns des autres.

Jusqu'à présent, le siège était muni d'un tableau comportant autant de commutateurs que de circuits électriques ou pneumatiques nécessaires, mais, de ce fait, l'utilisateur du siège était obligé d'effectuer un réglage long et parfois délicat. De plus, cet ensemble était coûteux et encombrant.

Un bloc de commande centralisé pour siège de véhicule permettant le réglage des differentes parties d'un siège comportant un dispositif inverseur et la sélection des differents moteurs s'effectuant à l'aide d'une dispositif sélectionneur, un micro-ordinateur et un indicateur se retrouve dans US-A-4 809 180.

L'invention est caractérisée par les caractéristiques de la revendication 1.

La présente invention remédie à cet inconvénient en créant un boîtier de commande pour régler la position de différents éléments constituant le siège considéré du véhicule.

Une autre particularité de l'invention réside dans le fait que ce boîtier peut être muni d'une mémoire permettant de garder en instance un réglage pour un utilisateur défini, ce qui fait que, lorsque l'utilisateur prend place à bord du siège, il peut en un temps très court obtenir la position des différents éléments du siège qu'il a choisie auparavant. De plus, le dessus du boîtier peut être muni d'un clavier dont les touches permettent, avec le réglage du siège la mémorisation des positions choisies par l'utilisateur.

Finalement, l'invention s'étend également à un boîtier qui permet de commander le chauffage de l'assise du siège en cas de nécessité.

Conformément à l'invention, on place sur un côté du siège, par exemple un boîtier contenant des circuits d'alimentation de différents moteurs commandant les mouvements des parties du siège, ces circuits alimentés à partir d'une source d'énergie embarquée permettant l'entraînement avec l'inversion du sens de rotation des moteurs à l'aide d'un dispositif inverseur et la sélection des différents moteurs s'effectuant à l'aide d'une molette portant des plots contrôlant chacun un circuit d'un moteur de commande d'un des organes du siège.

Suivant une autre caractéristique de l'invention, la molette est solidaire d'un dispositif de repérage placé devant une fenêtre de façon à pouvoir appeler le circuit recherché pour le réglage de la partie correspondante du siège.

Diverses autres caractéristiques de l'invention ressortent d'ailleurs de la description détaillée qui suit.

Une forme de l'objet de l'invention est représentée, à titre d'exemple non limitatif, au dessin annexé.

La fig. 1 est une élévation latérale schématique d'un siège réglable commandé par un boîtier conforme à l'invention.

La fig. 2 est un bloc schématique du boîtier.

La fig. 3 est une élévation latérale du boîtier.

La fig. 4 est un plan de dessus du boîtier.

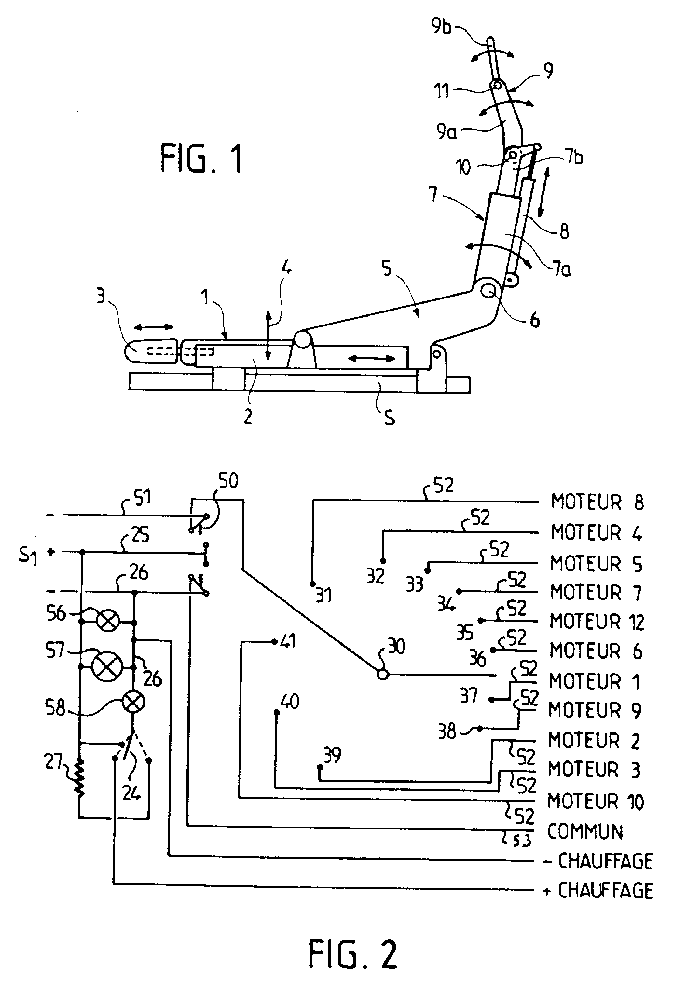

A la fig. 1, on a représenté schématiquement un siège dont l'assise 1 est montée sur une ou deux glissières 2 destinées à permettre le coulissement d'avant en arrière de l'assise. Ces glissières reposent sur le soubassement S de la carrosserie. De plus, l'armature de l'assise 1 comporte un coussin sous-cuisses 3 qui peut être déplacé d'avant en arrière ou d'arrière en avant suivant la position désirée par l'utilisateur. On peut même permettre, dans certains cas, que le mouvement d'avance ou de recul autorise, soit un réhaussement, soit un réabaissement de ce coussin sous-cuisses afin de mieux soutenir les genoux du passager. Comme on peut s'en rendre compte aisément, il est prévu entre les glissières 2 du siège et l'armature de l'assise un mécanisme 4 de rehaussement de l'assise afin de régler dans le plan vertical la position de cette assise, soit d'avant en arrière, soit d'arrière en avant. L'armature de l'assise 1 est prolongée à sa partie arrière par une armature coudée5 destinée à maintenir au point 6 soit d'un côté, soit des deux côtés du siège un ou deux mécanismes d'articulation pour le dossier 7. Ces mécanismes d'articulation placés au point 6 permettent un réglage d'inclinaison d'avant en arrière et d'arrière en avant et même dans certains cas, la mise du dossier dans le prolongement de l'assise pour réaliser une couchette. Dans le cas présent, le dossier 7 comprend, d'une part, une partie inférieure 7a fixe et, d'autre part, une partie supérieure 7b mobile verticalement à l'aide d'un mécanisme 8 pouvant être soit un vérin à double effet, soit un mécanisme à vis et écrou prisonnier, la vis-mère pouvant tourner sur elle-même afin d'allonger ou de raccourcir la longueur de la vis-mère en réglant ainsi la hauteur du dossier de siège qui se compose évidemment de deux coussins superposés.

Dans certains cas, il est également possible d'augmenter ou de diminuer la courbure dans le sens vertical du coussin inférieur du dossier afin de soutenir plus efficacement les reins du passager. Finalement, il a lieu de considérer la têtière 9 qui se compose de deux éléments superposés 9a, 9b qui peuvent être réglés en inclinaison indépendamment l'un de l'autre par des mécanismes 10, 11. On peut ainsi assurer à la têtière la position recherchée par l'utilisateur-passager qui a, de ce fait, la nuque et la tête bien maintenues évitant la fatigue et lui assurant un maintien du haut de la colonne vertébrale (vertèbres cervicales) et également l'arrière de la tête en cas d'accident.

Les différents mécanismes qui viennent d'être décrits sont tous animés par des moteurs électriques, des moteurs hydrauliques ou pneumatiques afin de définir la meilleure position des différentes parties d'un siège pour un individu considéré.

Le réglage peut donc s'effectuer, selon l'invention, à l'aide d'un boîtier 20 schématisé à la fig. 2.

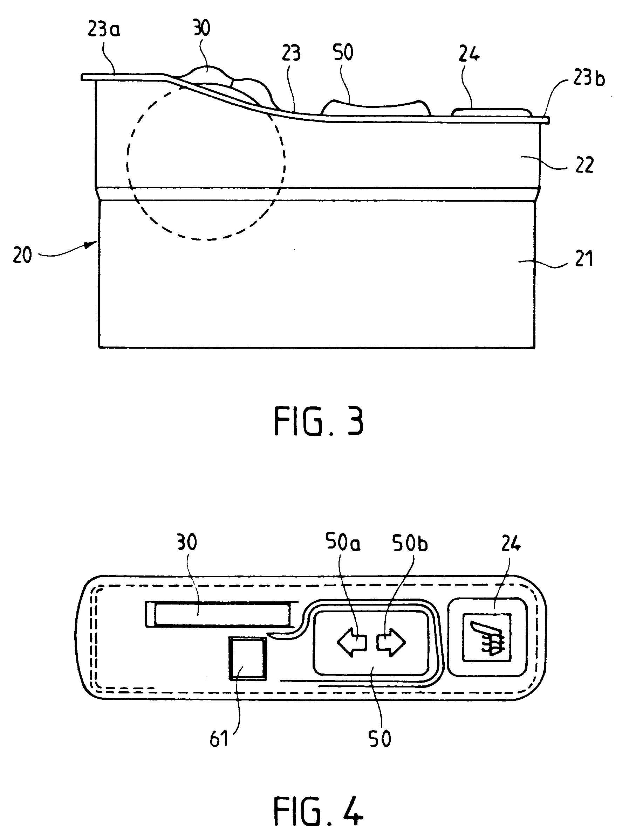

Comme cela est très visible à la fig. 3, le boîtier 20 se compose d'une partie inférieure 21 de forme parallélépipédique rectangle surmontée d'une partie supérieure 22 plus longue et légèrement plus large fermée par un couvercle 23 conformé, c'est-à-dire plus haut dans sa partie 23a que dans sa partie 23b. Le boîtier 20 contient un interrupteur à bouton poussoir 24 commandant la fermeture d'un circuit d'alimentation 25, 26 permettant à partir d'une source embarquée S₁ le chauffage d'une résistance, non représentée mais désignée par + et - à la fig. 2, chauffant le dessous du coussin de l'assise du siège. La partie avant du boîtier 20 contient une molette 30 présentant sur son pourtour des contacts 31, 32, 33, 34, 35, 36, 37, 38, 39, 40, 41 qui permettent la réalisation de circuits solidaires des contacts 31 à 41 assurant à partir d'un bouton poussoir 50 la fermeture du circuit alimentant depuis la source S₁ à travers les circuits 52, 53 les différents moteurs (moteurs 1 à 10, voir fig. 2) agissant sur :
a) le réglage longitudinal de l'assise à l'aide de glissières 2,
b) le positionnement du coussin sous-cuisses 3,
c) la réhausse 4 de l'assise du siège,
d) l'inclinaison du dossier 7 par l'intermédiaire des mécanismes 6,
e) la commande du mécanisme 8 élevant ou abaissant la partie supérieure 7b du dossier,
f) le réglage de la partie de coussin lombaire,
g) la commande des mécanismes 10, 11 réglant en inclinaison d'avant en arrière et d'arrière en avant les deux parties 9a, 9b de la têtière 9,
h) les différents autres éléments de réglage du dossier.

Il est également prévu des voyants lumineux de contrôle 56 (éclairage d'une fenêtre 61), 57 (éclairage du bouton-poussoir 50), 58 (éclairage du bouton-poussoir 24). La résistance 27 permet un éclairage double intensité suivant que l'interrupteur 24 est actif ou non.

Les circuits 31 à 41 sont prévus de façon que, suivant la position de l'inverseur 50, chaque moteur considéré est alimenté en marche avant ou en marche arrière pour obtenir l'avance ou le recul et l'inclinaison vers l'avant ou vers l'arrière des différentes parties du siège. C'est pourquoi, le bouton poussoir 50 (voir fig. 4) est muni de flèches 50a, 50b. La molette 30 entraîne en même temps par un mécanisme réducteur approprié l'apparition devant une fenêtre 61 du dessus du boîtier 20 d'un signe ou d'un chiffre donnant le circuit recherche de façon à permettre à l'utilisateur du siège le réglage recherché très souvent en fonction de sa morphologie.

Finalement, dans certains cas, le circuit du bouton-poussoir 50 est soumis à travers une interface au contrôle d'une mémoire, dont on appelle une combinaison (par exemple A) à l'aide d'un organe (non représenté) placé à côté du bouton-poussoir 50 et permettant ainsi après un réglage de base de mettre en mémoire ce réglage. Lorsque l'utilisateur du positionnement A du siège reprend le véhicule considéré, il n'a pas à faire un nouveau réglage et se contente d'appeler son code personnel sur la mémoire considérée. L'ensemble des éléments du siège reprend alors la position choisie par l'utilisateur. Ceci est très important en particulier pour le siège du conducteur.

La mémoire considérée peut contenir un certain nombre de combinaisons A, B, C ... etc permettant ainsi à plusieurs personnes d'utiliser le véhicule en réglant à chaque fois le siège en fonction de leur désir pour assurer un confort corporel maximum.

## Revendications

1. Bloc de commande centralisé pour siège de véhicule permettant le réglage horizontal, vertical et en inclinaison des différentes parties d'un siège, en particulier:
a) le réglage longitudinal de l'assise (1) à l'aide des glissières (2),
b) le réglage vertical de l'assise à l'aide d'un dispositif de réglage d'assiette (4),
c) le réglage du coussin sous-cuisses (3),
d) le réglage de la partie basse du dossier (7a),
e) le réglage de la partie haute du dossier (7b),
f) le réglage en inclinaison de la têtière (9) réalisée en un ou deux éléments (9a,9b),
g) le réglage en inclinaison de la têtière par un mouvement simple ou double (mécanismes 10,11),
h) les différents autres éléments de réglage du dossier,
le bloc de commande affectant la forme d'un boîtier (20) étant placé sur une partie du siège ou de la carrosserie du véhicule et contenant des circuits d'alimentation de différents moteurs commandant les mouvements des parties du siège, ces circuits alimentés à partir d'une source d'énergie embarquée (S₁) permettant l'entraînement avec l'inversion du sens de rotation des moteurs à l'aide d'un dispositif inverseur (50) et la sélection des différents moteurs s'effectuant à l'aide d'un dispositif sélectionneur, caracterisé en ce que le dispositif sélectionneur comprend une molette (30) portant des plots (31 à 41) contrôlant chacun un circuit d'un moteur de commande d'un des organes du siège, puis en ce que la molette (30) est solidaire d'un dispositif de repérage placé devant une fenêtre (61) de façon à pouvoir appeler le circuit recherché pour le réglage de la partie correspondante du siège.

2. Bloc de commande suivant la revendication 1, caractérisé en ce que le boîtier contient un interrupteur bouton-poussoir (24) commandant à partir d'une source d'énergie le chauffage d'une résistance assurant le chauffage de l'assise du siège.

3. Bloc de commande suivant l'une des revendications 1 et 2, caractérisé en ce que le boîtier (20) de réglage de la partie des différents organes d'un siège comporte une interface et une mémoire dans laquelle peut être incorporée la position des différents organes d'un siège pour obtenir un réglage automatique de la partie des différents organes du siège pour un passager défini et conformément à sa morphologie.

## Patentansprüche

1. Zentraler Steuerungsblock für einen Fahrzeugsitz, welcher die horizontale, vertikale und schräge Verstellung der verschiedenen Teile eines Sitzes gestattet, und zwar insbesondere:
a) die Verstellung in Längsrichtung der Sitzfläche (1) mit Hilfe von Gleitführungen (2),
b) die senkrechte Verstellung der Sitzfläche mit Hilfe einer Sitzverstellungseinrichtung (4),
c) die Verstellung des unter dem Schenkel verlaufenden Kissens (3),
d) die Verstellung des Unterteils der Rückenlehne (7a),
e) die Verstellung des Oberteils der Rückenlehne (7b),
f) die Schrägverstellung der Kopfstütze (9), die aus einem oder zwei Elementen (9a, 9b) besteht,
g) die Schrägverstellung der Kopfstütze durch eine einfache oder doppelte Bewegung (Mechanismen 10, 11),
h) die verschiedenen anderen Verstellelemente der Rückenlehne,
wobei der Steuerungsblock die Form eines Behälters (20) hat, der auf einem Teil des Sitzes oder der Karosserie des Fahrzeugs angeordnet ist und die Versorgungsschaltungen der verschiedenen Motore, welche die Bewegungen der Sitzteile steuern, enthält, wobei die von einer Energiequelle (S₁) gespeisten Schaltungen mit Hilfe einer Umkehreinrichtung (50) den Antrieb der Motoren mit Drehrichtungsmitteln und die Auswahl der verschiedenen Motoren mit Hilfe einer Auswahleinrichtung ermöglichen, **dadurch gekennzeichnet,** daß die Auswahleinrichtung ein Kranzrad (30) mit Kontaktstücken (31 bis 41) umfaßt, von denen jedes eine Schaltung eines Steuerungsmotors eines der Sitzteile steuert, und daß das Kranzrad (30) mit einer Markierungseinrichtung, die vor einem Fenster (61) angeordnet ist, derart verbunden ist, daß die gesuchte Schaltung für die Steuerung des entsprechenden Sitzteils aufgerufen werden kann.

2. Steuerungsblock nach Anspruch 1, **dadurch gekennzeichnet,** daß der Behälter einen Druckknopfschalter (24) aufweist, der ausgehend von einer Energiequelle die Widerstandsheizung steuert, welche die Heizung der Sitzfläche des Sitzes gewährleistet.

3. Steuerungsblock nach einem der Ansprüche 1 und 2, **dadurch gekennzeichnet,** daß der Behälter (20) für die Steuerung eines Teils der verschiedenen Organe eines Sitzes eine Schnittstelle und einen Speicher aufweist, in den die Stellung der verschiedenen Organe eines Sitzes eingegeben sein kann, um eine automatische Steuerung des Teils der verschiedenen Organe des Sitzes für einen bestimmten Fahrgast und entsprechend seinen Körpermaßen zu erhalten.

## Claims

1. Centralized control block for a vehicle seat to enable the horizontal adjustment, the vertical adjustment and the adjustment in inclination of various parts of a seat, in particular :
a) the longitudinal adjustment of the sitting portion (1) by means of slide members (2),
b) the vertical adjustment of the sitting portion by means of a trim adjustment device (4),
c) the adjustment of the under-thigh cushion (3),
d) the adjustment of the lower part of the back portion (7a),
e) the adjustment of the upper part of the back portion (7b),
f) the adjustment in inclination of the head cushion (9) which is made in one or two parts (9a, 9b),
g) the adjustment in inclination of the head cushion by a simple or double movement (mechanisms 10, 11),
h) the various other adjusting elements of the back portion,
the control block having the shape of a box (20) being disposed on a part of the seat or of the car body of the vehicle and including circuits for supplying power to various motors that control movements of parts of the seat, these circuits fed from an inboard power source (S₁) through an inverting device (50) to enable control with inversion in the rotation direction of the motors and via a selectioning device to enable selection among the various motors, characterized in that the selectioning device comprises a wheel (30) provided with studs (31-41), each of which controlling a circuit of a motor controlling one of the members of the seat, then in that the wheel (30) is fixed to an indexing device that is placed in front of a window (61) in order to be able to call the desired circuit for the adjustment of the corresponding part of the seat.

2. Control block according to claim 1, characterized in that the box contains a push-botton switch (24) for controlling, from a power source, a resistor for heating the sitting portion of the seat.

3. Control block according to one of claims 1 and 2, characterized in that the box (20) for adjusting the part of the various members of a seat comprises an interface and a memory means in which can be incorporated the position of the various members of a seat for obtaining an automatic adjustment of the part of the various members of the seat for a given passenger and according to his or her morphology.
